(19) **Europäisches Patentamt**
**European Patent Office**
**Office européen des brevets**

(11) **EP 2 660 793 B1**

(12) **EUROPÄISCHE PATENTSCHRIFT**

(45) Veröffentlichungstag und Bekanntmachung des Hinweises auf die Patenterteilung:
**27.08.2014 Patentblatt 2014/35**

(51) Int Cl.:
**G08G 1/017** *(2006.01)*  **G07B 15/06** *(2011.01)*

(21) Anmeldenummer: **12166502.0**

(22) Anmeldetag: **03.05.2012**

(54) **Verfahren und Vorrichtungen zur Identifizierung eines ortsnutzenden Fahrzeugs**

Method and device for identifying a vehicle using a space

Procédé et dispositifs destinés à l'identification d'un véhicule utilisant un lieu

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.11.2013 Patentblatt 2013/45**

(73) Patentinhaber: **Kapsch TrafficCom AG**
**1120 Wien (AT)**

(72) Erfinder: **Güner, Refi-Tugrul**
**2500 Baden (AT)**

(74) Vertreter: **Weiser, Andreas**
**Patentanwalt**
**Kopfgasse 7**
**1130 Wien (AT)**

(56) Entgegenhaltungen:
**EP-A1- 0 401 192    EP-A1- 1 519 320**
**EP-A2- 0 689 169    US-A- 5 686 920**

**Beschreibung**

Die vorliegende Erfindung betrifft ein Verfahren zur Identifizierung eines einen vorgegebenen Ort nutzenden Fahrzeugs. Die Erfindung betrifft ferner eine Funkbake und eine Onboard-Unit zur Verwendung in diesem Verfahren.

Verfahren zur Fahrzeugidentifizierung werden beispielsweise zur Aufzeichnung, Kontrolle, Autorisierung und/oder Vermautung (Vergebührung) von Ortsnutzungen von Fahrzeugen benötigt. Solche Ortsnutzungen können beispielsweise der Eintritt in zugangsbeschränkte oder überwachte Bereiche, ein kostenpflichtiger Aufenthalt an einem bestimmten Ort, z.B. ein gebührenpflichtiger Parkplatz, oder das Benützen mautpflichtiger Verkehrswege wie Autobahnen oder Innenstädte (Citymaut) usw. sein. Bei bekannten Verfahren zur Fahrzeugidentifikation werden entweder Fahrzeugkennzeichen (Nummerntafeln) mittels OCR (optical character recognition) gelesen, oder die Fahrzeuge werden mit Onboard-Units (OBUs) ausgestattet, welche eine eindeutige Identifikation haben, die über eine Funkschnittstelle wie DSRC (dedicated short range communication), RFID (radio frequency identification), WLAN (wireless local area network), WAVE (wireless access for vehicular environments) od.dgl. ausgelesen werden kann. Ein solches Verfahren ist beispielsweise aus der EP 1519320 A1 bekannt.

Um eine konkrete Zuordnung einer funkausgelesenen OBU-Identifikation zu dem vom Fahrzeug genutzten Ort zu schaffen, werden derzeit die zum Funkauslesen verwendeten Funkbaken auf speziellen Brücken ("gantries") an den zu überwachenden Ort aufgestellt und mit eng begrenzten Funkabdeckungsbereichen ausgestattet; oder es werden satellitennavigationsgestützte Onboard-Units eingesetzt, die ihre selbstermittelten Positionsdaten über ein Mobilfunknetz an eine Zentrale senden, welche einen Kartenabgleich ("map matching") mit zu überwachenden Orten durchführt. Alle diese bekannten Verfahren benötigen nicht nur spezielle, aufwendige Installationen sowohl im Fahrzeug als auch auf der Straße, sondern offenbaren die Identität der OBU (in Form der funkausgelesenen OBU-Identifikation) auch dann, wenn keine zu überwachende Ortsnutzung vorliegt, was aus Datenschutzgründen bedenklich ist.

Die Erfindung setzt sich zum Ziel, Verfahren und Vorrichtungen der einleitend genannten Art zu schaffen, welche auf einfachere Art und Weise und mit verbesserter Vertraulichkeit für unbeteiligte Fahrzeuge die Identifizierung ortsnutzender Fahrzeuge ermöglicht.

Dieses Ziel wird in einem ersten Aspekt der Erfindung mit einem Verfahren der eingangs genannten Art erreicht, umfassend:

auf dem Fahrzeug Mitführen einer Onboard-Unit, die wiederholt Statusmeldungen über Funk aussendet, welche jeweils eine aktuelle Position der Onboard-Unit und eine nach jeweils einer oder mehreren Statusmeldungen wechselnde Funkkennung angeben, Empfangen zumindest einer Statusmeldung in einer Funkbake,
Detektieren einer Ortsnutzung des Fahrzeugs durch Auswerten der zumindest einen Statusmeldung anhand der darin angegebenen Position(en) bezüglich des vorgegebenen Orts,
Senden einer Identifikationsanfrage von der Funkbake an die durch die Funkkennung aus der zumindest einen Statusmeldung adressierte Onboard-Unit,
Empfangen und Berechtigungsprüfen der Identifikationsanfrage in der Onboard-Unit und, wenn die Anfrage berechtigt ist, Senden einer über mehrere Funkkennungswechsel gleichbleibenden eindeutigen Identifikation der Onboard-Unit an die Funkbake.

Die Erfindung beruht auf einer neuartigen Integration von Statusmeldungen sendenden Onboard-Units, wie sie beispielsweise in den Standards ITS-G5 oder WAVE (IEEE 802.11p) in Form von z.B. CAM-Nachrichten (common awareness messages) oder BSM-Nachrichten (basic safety messages) definiert sind. Die Nachrichten werden als wiederholte Rundfunksendungen (broadcasts) zur Warnung oder Information von benachbarten Onboard-Units oder straßenseitiger Infrastruktur ausgestrahlt, um Kollisionen zu vermeiden oder dem Fahrer verbesserte Situationsübersicht zu bieten. Um die Erstellung von Bewegungsprofilen eines Fahrzeugs zu erschweren, werden die Statusmeldungen zum Schutz der Privatsphäre nur unter temporären, von Zeit zu Zeit wechselnden und den Systembetreibern nicht bekannten Funkkennungen versandt. Die Erfindung wertet lediglich die temporären Funkkennungen zumindest einer Statusmeldung der Onboard-Units aus. Erst *nachdem* die Ortsnutzung - durch die temporären Funkkennungen anonym - detektiert worden ist, wird die Onboard-Unit zur Deklaration ihrer "wahren" Identität, z.B. Zahlungs-, Anwender- oder Applikationsidentität, aufgefordert. Damit ist sichergestellt, dass tatsächlich nur jene Onboard-Units identifiziert werden, welche den vorgegebenen Ort benutzt haben; Onboard-Units von Drittfahrzeugen, welche den Ort lediglich in der Nähe passieren oder kurz vor der tatsächlichen Ortsnutzung wenden usw., werden nicht identifiziert, d.h. bleiben anonym. Dadurch können hohe Datenschutzanforderungen in Bezug auf Privatsphäre ("privacy") erfüllt werden, ohne dass aufwendige straßenseitige Installationen, OBU-Modifikationen oder gesonderte Anonymisierungseinrichtungen wie Proxy-Rechner erforderlich sind.

Eine besonders bevorzugte Ausführungsform der Erfindung zeichnet sich dadurch aus,
dass zumindest zwei Statusmeldungen in einer Funkbake empfangen und anhand der darin angegebenen Funkkennungen einander zugeordnet werden, und
dass die Ortsnutzung des Fahrzeugs durch Auswerten der einander zugeordneten Statusmeldungen anhand der darin angegebenen Positionen bezüglich des vorgegebenen Orts detektiert wird.

Durch einander Zuordnen und Auswerten zumindest zweier Statusmeldungen wird eine Onboard-Unit über eine kurze Zeit mitverfolgt, die ausreicht, um die Nutzung eines bestimmte Orts mit hoher Sicherheit feststellen zu können. Dazu können bereits zwei oder einige wenige Statusmeldungen genügen, welche ein und derselben Onboard-Unit zugeordnet werden können, um Messfehler ausschließen und eine erfolgte Bewegung sicher detektieren zu können. Im einfachsten Fall kann es sich bei einer solcherart detektierten Ortsnutzung um das Übertreten einer vorgegebenen Grenze handeln, wenn die erste Statusmeldung eine Position vor der Grenze und die zweite Statusmeldung eine Position nach der Grenze angibt, um eine Ortsnutzung zu detektieren.

Gemäß einer weiteren bevorzugten Ausführungsform der Erfindung erfolgt das Berechtigungsprüfen durch Überprüfen eines von der Funkbake mit der Identifikationsanfrage mitgesandten kryptographischen Absenderzertifikats der Funkbake. Dadurch offenbart die Onboard-Unit ihre Identität nur identifizierten, berechtigten Fragestellern, was den Schutz der Privatsphäre weiter verstärkt.

Aus demselben Grund ist es besonders günstig, wenn die Identifikation der Onboard-Unit über einen verschlüsselten Kanal an die Funkbake gesendet wird. Hiefür kann eine direkte (point-to-point) verschlüsselte Kommunikation zwischen Onboard-Unit und anfragender Funkbake errichtet werden. Der verschlüsselte Kommunikationskanal kann beispielsweise Teil des Protokolls auf der Funkschnittstelle zwischen Onboard-Unit und Funkbake sein, z.B. Teil des ITS-G5- oder WAVE-Standards, könnte alternativ aber auch gesondert über ein 3G-, 4G- oder 5G-Mobilfunknetz errichtet werden.

In einer bevorzugten Anwendung des Identifikationsverfahrens der Erfindung wird die in der Funkbake empfangene Identifikation zusammen mit einem Zeitstempel in einem Speicher aufgezeichnet, um die Ortsnutzung zu protokollieren, z.B. für Überwachungszwecke.

In einer alternativen Anwendung des Verfahrens der Erfindung wird die in der Funkbake empfangene Identifikation mit zumindest einer vorgespeicherten berechtigten Identifikation verglichen, um die Ortsnutzung zu autorisieren, beispielsweise um Schranken zu öffnen, eine Radsperre abzusenken, ein Enforcement-System zu deaktivieren usw.

In einer weiteren Anwendung des Identifizierungsverfahrens der Erfindung wird die in der Funkbake empfangene Identifikation zum Aufsuchen und Belasten eines der Identifikation zugeordneten Mautkontos verwendet, um die Ortsnutzung zu vermauten, beispielsweise zur Einhebung von Orts- und/oder Zeitmaut, Parkgebühren, Straßenbenutzungsgebühren, Citymaut od.dgl.

In allen drei Varianten kann bevorzugt vorgesehen werden, dass die Funkbake nach Protokollierung, Autorisierung oder Vermautung der Ortsnutzung eine für die Funkbake eindeutige Bakenkennung an die Onboard-Unit sendet, welche diese speichert und bei zumindest einem nächsten Aussenden ihrer Statusmeldung(en) oder Senden ihrer Identifikation mitsendet, und dass die Funkbake eine von einer Onboard-Unit empfangene Statusmeldung oder Identifikation ignoriert, wenn die dazu mitempfangene Bakenkennung gleich ihrer eigenen Bakenkennung ist. Dadurch können versehentliche Doppel-Protokollierungen, -Autorisierungen oder -Vermautungen ein und derselben Onboard-Unit im Funkabdeckungsbereich einer Funkbake verhindert werden.

Gemäß einem weiteren bevorzugten Merkmal der Erfindung können mehr als zwei Statusmeldungen empfangen und einander zugeordnet und aus den darin angegebenen Positionen eine Bewegungsbahn der Onboard-Unit berechnet werden, welche zur Detektion der Ortsnutzung mit dem vorgegebenen Ort verglichen wird. Dadurch können die Detektionssicherheit erhöht und beispielsweise "Messausreißer" besser unterdrückt werden.

Besonders günstig ist es, wenn die Funkkennung nach jeweils etwa 5 bis 1000, bevorzugt 20 bis 100, Statusmeldungen gewechselt wird. Je häufiger die Funkkennung wechselt, desto größer ist der Datenschutz hinsichtlich Nachverfolgbarkeit einer bestimmten Onboard-Unit; je seltener die Funkkennung wechselt, desto geringer ist die Gefahr, dass um den zu detektierenden Ort die Funkkennung wechselt, was die Detektion erschweren würde. Die genannten Werte stellen einen guten Kompromiss zwischen diesen beiden gegensätzlichen Anforderungen dar.

Alternativ kann das Wechselintervall der Funkkennung der Onboard-Unit auch so eingestellt werden, dass die Funkkennung frühestens nach Ablauf einer vorgegebenen Zeitspanne gewechselt wird. Die vorgegebene Zeitspanne kann auf Grundlage der Größe eines üblichen Funkabdeckungsbereichs einer Funkbake und einer durchschnittlichen Geschwindigkeit von Onboard-Units so bemessen werden, dass bei der Passage einer Onboard-Unit an einer Funkbake mit hoher Sicherheit kein Funkkennungswechsel auftritt.

Eine weitere bevorzugte Ausführungsform der Erfindung besteht darin, dass die Funkkennung nicht gewechselt wird, solange sich die Onboard-Unit im Funkabdeckungsbereich ein- und derselben Funkbake befindet. Die Onboard-Unit kann dazu beispielsweise den Funkabdeckungsbereich einer Funkbake selbst ausmessen, wenn die Funkbake periodisch Bakenkennungen aussendet, oder aufgrund vorgespeicherter Listen bzw. Karten von Funkabdeckungsbereichen bekannter Funkbaken ermitteln, oder von einer Funkbake im Rahmen einer ihrer Aussendungen oder ihrer Identifikationsanfrage mitgeteilt bekommen.

Die Statusmeldungen können in an sich bekannter Weise auch einen aktuellen Bewegungsvektor der Onboard-Unit enthalten, welcher beim Detektieren der Ortsnutzung mitverwendet wird, um die Detektionssicherheit weiter zu erhöhen.

Gemäß einem weiteren bevorzugten Merkmal der Erfindung kann die Position der Onboard-Unit mittels Satellitennavigation bestimmt und durch Bezugnahme auf eine mittels Satellitennavigation bestimmte Referenzposition der Funkbake verbessert werden, in der Art von "differential GPS" (dGPS), wobei die Funkbake den Referenzempfänger zur Verbesserung der satellitennavigationsbestimmten Positionen der Onboard-Units bildet.

Alternativ kann die Position der Onboard-Unit mittels Satellitennavigation bestimmt und durch Bezugnahme auf mindestens eine weitere mittels Satellitennavigation bestimmte Position einer benachbarten Onboard-Unit verbessert werden. Diese Ausführungsform beruht auf der Annahme, dass die im Funkabdeckungsbereich einer Funkbake befindlichen Onboard-Units aufgrund ihrer Nähe jeweils denselben Satellitennavigationsfehlern unterliegen und daher Nachbar-OBUs als Vergleichsempfänger in der Art von dGPS herangezogen werden können.

Grundsätzlich könnte eine Funkbake zur Detektion von Ortsnutzungen in ihrer engeren oder weiteren Nachbarschaft oder sogar in entfernten Gebieten außerhalb ihres Funkabdeckungsbereichs herangezogen werden; bevorzugt enthält der Funkabdeckungsbereich der Funkbake jedoch den vorgegebenen Ort, sodass jede Funkbake für Ortsnutzungen in ihrer unmittelbaren Umgebung zuständig ist und dadurch zeit- und ortsnahe Messdaten von Onboard-Units erhält.

Wie erwähnt können die vorgegebenen Orte, deren Ortsnutzungen detektiert werden sollen, allgemeiner Art sein. Gemäß einer ersten Ausführungsform ist ein solcher Ort ein geographischer Punkt und die Ortsnutzung ein Unterschreiten eines Maximalabstands zu dem Punkt; alternativ kann der Ort ein Bereich und die Ortsnutzung ein Aufenthalt im Bereich sein; oder der Ort kann zumindest ein Straßensegment und die Ortsnutzung ein Befahren des zumindest einen Straßensegments sein.

Da Bereiche und Straßensegmente häufig durch eine Grenze definiert werden können, besteht eine bevorzugte Ausführungsform der Erfindung darin, dass der Ort eine Grenze und die Ortsnutzung ein Grenzübertritt ist, wobei die Grenzen auf einer digitalen Straßenkarte mit vektorisierten Straßensegmenten repräsentiert werden, umfassend:

> Bestimmen eines Schnittpunkts der Grenze mit einem Straßensegment und einer Referenzrichtung in der Orientierung dieses Straßensegments,
> fortlaufendes Projizieren von Vektoren, die jeweils zwischen einer der Positionen aus den genannten Statusmeldungen und dem Schnittpunkt bestimmt werden, auf die Referenzrichtung, um eine Folge von Projektionen zu erhalten, und
> Detektieren des Grenzübertritts, wenn in der Folge von Projektionen ein Richtungs- oder Vorzeichenwechsel eintritt.

Damit kann ein Grenzübertritt mit einfachen Mitteln sicher und zuverlässig erkannt werden; Detektionsfehler, wie sie beispielsweise beim Umkehren vor der Grenze auftreten könnten, können dabei sicher ausgeschlossen werden.

Die Projektionen der Positionsvektoren auf die Referenzrichtung können auf unterschiedliche Art und Weise bestimmt werden. Gemäß einer ersten Ausführungsform der Erfindung erfolgt das Projizieren durch Bilden von vektoriellen Inprodukten der Vektoren mit der Referenzrichtung, und ein Grenzübertritt wird bei einem Vorzeichenwechsel der Inprodukte detektiert. In einer alternativen Ausführungsform der Erfindung erfolgt das Projizieren durch Transformieren der Vektoren in ein lokales Koordinatensystem mit der Referenzrichtung als x-Achse, und ein Grenzübertritt wird bei einem Vorzeichenwechsel ihrer x- Koordinaten detektiert. Beide Varianten können mit verhältnismäßig geringer Rechenleistung berechnet werden und eignen sich daher auch für Echtzeit-Implementierungen sowohl in dezentralen "map matching"-OBUs ("thick-clients") als auch in zentralen "map matching"-Servern eines Straßenmautsystems.

Eine bevorzugte Ausführungsform der Erfindung zeichnet sich durch den weiteren Schritt des Validierens des Grenzübertritts aus, wenn die Beträge der beiden vor und nach dem Richtungs- bzw. Vorzeichenwechsel liegenden Projektionen ein vorgegebenes Minimum überschreiten. Dadurch können Ungenauigkeiten der Positionsbestimmungen berücksichtigt und eine besonders zuverlässige Erkennung des Passierens der virtuellen Grenze erreicht werden.

Eine weitere bevorzugte Variante des Verfahrens der Erfindung umfasst den zusätzlichen Schritt des Validierens des Grenzübertritts, wenn die Normalabstände der beiden vor und nach dem Richtungs- bzw. Vorzeichenwechsel liegenden Positionen zur Referenzrichtung ein vorgegebenes Maximum nicht überschreiten. Mit dieser zusätzlichen Überprüfung kann eine Fehldetektion bei Befahrung von naheliegenden parallelen Straßen ausgeschlossen werden.

In einem zweiten Aspekt schafft die Erfindung eine Funkbake zur Identifizierung eines einen vorgegebenen Ort nutzenden Fahrzeugs, das eine Onboard-Unit mitführt, die wiederholt Statusmeldungen über Funk aussendet, welche jeweils eine aktuelle Position der Onboard-Unit und eine nach jeweils einer oder mehreren Statusmeldungen wechselnde Funkkennung angeben, wobei die Funkbake dafür ausgebildet ist, mit Hilfe eines Prozessors und eines daran angeschlossenen Sendeempfängers

zumindest eine Statusmeldung zu empfangen,

eine Ortsnutzung durch Auswerten der zumindest einen Statusmeldung anhand der darin angegebenen Position(en) bezüglich des vorgegebenen Orts zu detektieren,

eine Identifikationsanfrage an die durch die Funkkennungen der zumindest einen Statusmeldung adressierbare Onboard-Unit zu senden, und daraufhin

eine über mehrere Funkkennungswechsel gleichbleibende eindeutige Identifikation der Onboard-Unit zu empfangen.

Besonders günstig ist es, wenn die Funkbake dafür ausgebildet ist,

zumindest zwei Statusmeldungen zu empfangen und anhand der darin angegebenen Funkkennungen einander zuzuordnen, und

die Ortsnutzung des Fahrzeugs durch Auswerten der einander zugeordneten Statusmeldungen anhand der darin angegebenen Positionen bezüglich des vorgegebenen Orts zu detektieren.

Bevorzugt enthält die Funkbake ein kryptographisches Absenderzertifikat und ist dafür ausgebildet, dieses mit der Identifikationsanfrage mitzusenden.

In einem dritten Aspekt schafft die Erfindung eine Onboard-Unit, mit einem Prozessor, einem Satellitennavigationsempfänger zur Positionsbestimmung und einem Sendeempfänger zur Funkkommunikation, wobei die Onboard-Unit dafür ausgebildet ist,

mit Hilfe des Sendeempfängers wiederholt Statusmeldungen über Funk auszusenden, welche jeweils eine vom Satellitennavigationsempfänger bestimmte Position und eine nach jeweils mehreren Statusmeldungen wechselnde Funkkennung der Onboard-Unit enthalten,

eine an ihre aktuelle Funkkennung adressierte und ein kryptographisches Absenderzertifikat enthaltende Identifikationsanfrage von einer Funkbake zu empfangen, das Absenderzertifikat zu validieren und, wenn es valid ist,

eine über mehrere Funkkennungswechsel gleichbleibende eindeutige Identifikation der Onboard-Unit an die Funkbake zu senden.

Bevorzugt sind die Statusmeldungen der Onboard-Unit CAM-Nachrichten nach dem ITS-G5-Standard oder BSM-Nachrichten nach dem WAVE-Standard.

Hinsichtlich weiterer Merkmale und Vorteile der Funkbake und Onboard-Unit der Erfindung wird auf die obigen Ausführungen zum Verfahren und die nachstehende Beschreibung bevorzugter Ausführungsbeispiele verwiesen, welche unter Bezugnahme auf die begleitenden Zeichnungen gegeben wird, in denen zeigt:

    Fig. 1 im Rahmen des Verfahrens der Erfindung wirkende Komponenten einschließlich der Funkbake und mehrerer Onboard-Units der Erfindung in einem schematischen Überblick;

    Fig. 2 ein Blockschaltbild und gleichzeitig Signalflussdiagramm des Verfahrens der Erfindung;

    Fig. 3 ein Sequenzdiagramm des Nachrichtenaustauschs auf der Funkschnittstelle zwischen Funkbake und Onboard-Unit;

    Fig. 4 die Bewegung eines Objekts auf einer digitalen Straßenkarte schematisch im Überblick;

    Fig. 5 eine erste Ausführungsform eines Verfahrens zur Grenzübertrittsdetektion mittels vektorieller Inproduktbildung; und

    Fig. 6 eine zweite Ausführungsform eines Verfahrens zur Grenzübertrittsdetektion mittels Koordinatentransformation.

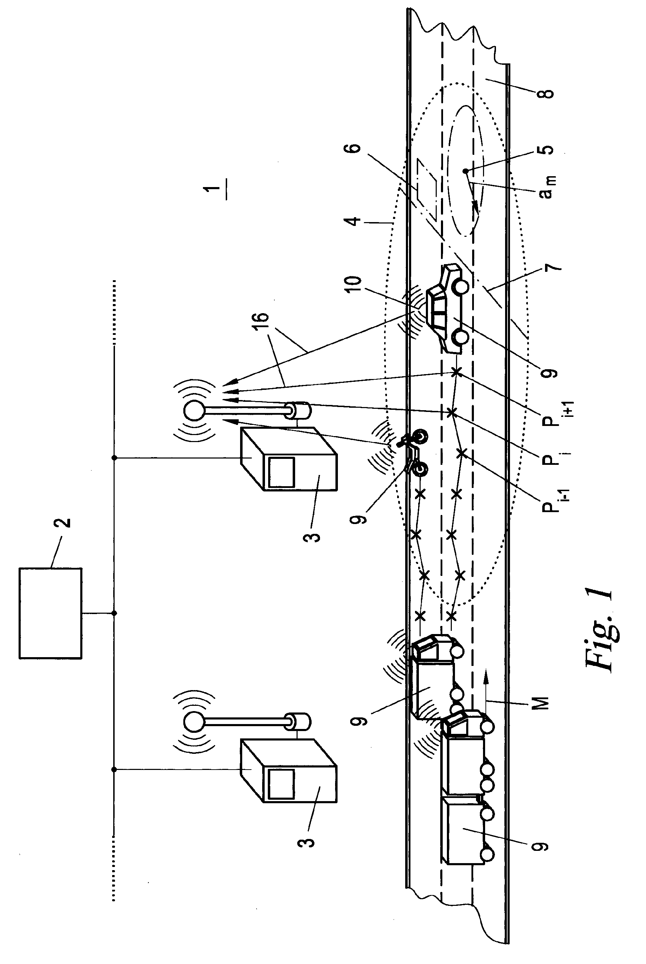

Fig. 1 zeigt als beispielhafte Anwendung des Identifizierungsverfahrens der Erfindung ein Straßenmautsystem 1 mit einer Zentrale 2 und einer Vielzahl damit in Verbindung stehender, geographisch verteilter, straßenseitig aufgestellter Funkbaken (roadside entities, RSE) 3. Die Funkbaken 3 haben jeweils einen begrenzten Funkabdeckungsbereich 4, z.B. einen Funkradius von 200 m, innerhalb dessen vorgegebene Orte wie Punkte 5 ("virtuelle Mautstellen"), Bereiche 6 (z.B. Parkplätze), Grenzen 7 (z.B. virtuelle "gantries", Innenstadtgrenzen usw.) oder Straßensegmente 8 definiert sind, wobei die Orte 5 - 8 auch ganz oder teilweise außerhalb des Funkabdeckungsbereichs 4 liegen können. Bevorzugt liegen sie (zumindest teilweise) innerhalb des Funkabdeckungsbereichs 5, was die Zuordnung einer Funkbake 3 zu den Orten 5 - 8, für welche sie zuständig ist, vereinfacht.

Die Funkbaken 3 detektieren Ortsnutzungen von Fahrzeugen 9, die ihren Funkabdeckungsbereich 4 passieren, d.h. ob - und optional wie lange - sie einen der Orte 5 - 8 nutzen, und identifizieren solche ortsnutzenden Fahrzeuge 9. Fahrzeuge 9, die keinen der Orte 5 - 8 nutzen, sollen nicht identifiziert werden, d.h. anonym bleiben.

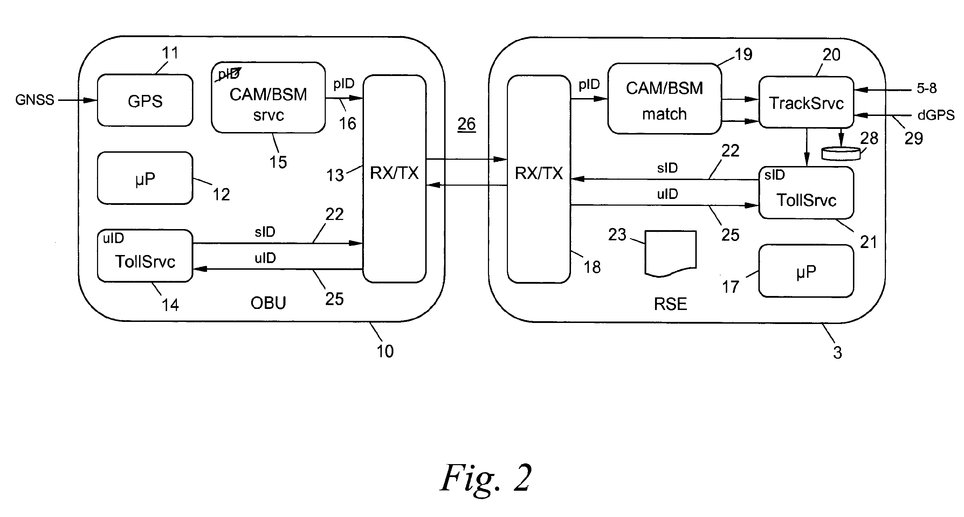

Zu den genannten Zwecken werden alle Fahrzeuge 9 mit Onboard-Units (OBUs) 10 ausgestattet, deren Aufbau anhand von Fig. 2 näher erläutert wird.

Gemäß Fig. 2 weist jede OBU 10 einen Satellitennavigationsempfänger 11 zur fortlaufend wiederholten Bestimmung ihrer jeweils aktuellen Position ("position fix") $P_1$, $P_2$, ..., allgemein $P_i$, in einem globalen Satellitennavigationssystem (global navigation satellite system, GNSS) wie GPS, GLONASS, Galileo, od.dgl. auf. Ferner ist die OBU 10 mit einem Prozessor 12 und einem Sendeempfänger 13 ausgestattet, wobei einige der Datenverbindungen zwischen Satellitennavigationsempfänger 11, Prozessor 12 und Sendeempfänger 13 zwecks Übersichtlichkeit nicht dargestellt sind.

Mit 14 ist schematisch eine vom Prozessor 12 ausführbare Dienstapplikation bezeichnet, beispielsweise eine Mautapplikation, die in der später noch erörterten Weise mit den Funkbaken 3 und der Zentrale 2 des Straßenmautsystems 1 zusammenwirken kann und zu diesem Zweck über eine im Straßenmautsystem 1 eindeutige OBU-Kennung uID ("unique ID") verfügt. Die OBU-Identifikation uID kann beispielsweise eine eindeutige Fertigungskennung der OBU 10, der Name ihres Besitzers, der Name des Fahrzeughalters des Fahrzeugs, auf dem die OBU 10 montiert ist, eine Konto- oder Kreditkartenkennung des Fahrzeughalters od.dgl. sein. Die OBU-Identifikation uID ist im Straßenmautsystem 1 der Zentrale 2 und/oder den Funkbaken 3 bekannt und kann dort zur Identifikation des Fahrzeugs 9, welches die OBU mitführt, verwendet werden.

Mit 15 ist eine vom Prozessor 12 abgearbeitete Sicherheitsapplikation bezeichnet, mittels welcher die OBU 10 fortlaufend wiederholt, bevorzugt periodisch etwa alle 100 ms, über ihren Sendeempfänger 13 eine Statusmeldung 16 aussendet. Die Statusmeldung 16 ist zum Empfang durch OBUs 10 benachbarter Fahrzeuge 9 und/oder straßenseitige Infrastruktur wie die Funkbaken 3 gedacht und erfordert weder eine Empfangsbestätigung noch einen tatsächlichen Empfang; die Applikation 15 sendet Statusmeldungen 16 über den Sendeempfänger 13 ohne Rücksicht darauf, ob sie von einem Empfänger empfangen werden oder nicht, optional kann sie aber auch zusätzlich von Funkbaken 3 oder anderen OBUs 10 dazu aufgefordert werden.

Die Statusmeldungen 16 enthalten jeweils (zumindest) die letzte der vom Satellitennavigationsempfänger 11 bestimmte Position $P_i$ der OBU 10 und optional auch noch weitere Daten, beispielsweise Geschwindigkeit und Bewegungsrichtung (Bewegungsvektor) M, Höhe, Messgenauigkeit usw. Jede Statusmeldung 16 ist dabei mit einer temporären Funkkennung pID versehen, sodass Nachbar-OBUs oder Infrastruktur aufeinanderfolgende Statusmeldungen 16 anhand der temporären Funkkennung pID korrelieren, d.h. einander zuordnen können, um zumindest über kurze Zeit die Bewegungsbahn (Trajektorie) einer OBU 10 anhand der Positionen $P_i$ aus aufeinanderfolgenden Statusmeldungen 16 ermitteln zu können.

Onboard-Units 10 mit Sicherheitsapplikationen 15 zur Versendung derartiger Statusmeldungen 16 sind beispielsweise in den Standards ITS-G5 und WAVE (IEEE 802.11p) definiert. Statusmeldungen 16 dieser Art werden im ITS-G5-Standard als "common awareness messages" (CAM) und im WAVE-Standard (insbesondere SAE J2735) als "basic safety messages" (BSM) bezeichnet. Die temporäre Funkkennung pID einer Statusmeldung 16 kann dabei beispielsweise eine temporäre IP6-Adresse, eine MAC-Adresse oder Pseudo-MAC-Adresse der OBU 10 sein, eine genaue oder bevorzugt verallgemeinerte Geo-Position (Ortskoordinaten) der OBU 10, od.dgl. Im einfachsten Fall kann daher die temporäre Funkkennung pID sogar gleich der Position $P_i$ der OBU 10 sein.

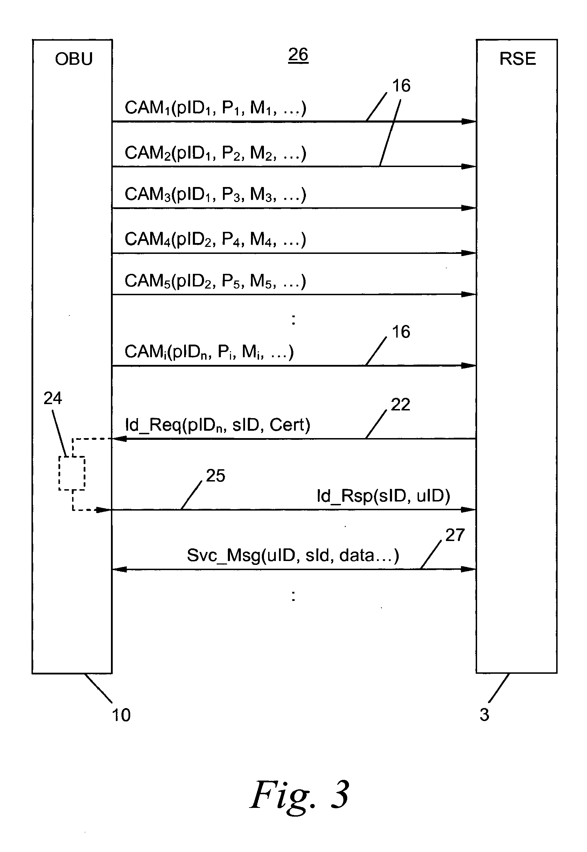

Die Funkkennung pID ist im Straßenmautsystem 1 bzw. der Zentrale 2 und den Funkbaken 3 nicht bekannt und hat dort keine Bedeutung; sie kann von einer OBU 10 beispielsweise auch zufällig gewählt werden. Die Funkkennung pID ist auch in dem Sinne "temporär", dass sie nach einer bestimmten Anzahl von Statusmeldungen 16 wechselt, um eine Nachverfolgung einer bestimmten OBU 10 über einen längeren Zeitraum zu unterbinden. Beispielsweise wird die Funkkennung pID nach jeweils jeder fünften bis tausendsten, bevorzugt jeder zwanzigsten bis hundertsten, Statusmeldung 16 gewechselt. Dieses Verfahren ist in dem Sequenzdiagramm von Fig. 3 ausführlicher gezeigt.

Alternativ kann die Funkkennung pID nach einer vorgegebenen Zeitspanne gewechselt werden, oder der Wechsel kann selektiv unterbleiben, d.h. von der Onboard-Unit 10 unterdrückt werden, solange sie sich im Funkabdeckungsbereich 4 ein und derselben Funkbake 3 befindet. Die Onboard-Unit 10 kann dazu Informationen über die Größe des Funkabdeckungsbereichs 4 vorgespeichert haben, z.B. in Form von Listen oder Karten, oder auch von einer Funkbake 3 mitgeteilt bekommen, sei es in Form periodischer Rundstrahlsendungen einer Funkbake 3 oder im Zuge der später noch erörterten Nachrichten 22, 27 und 27'.

Gemäß Fig. 3 sendet die OBU 10 wiederholt Statusnachrichten 16, hier bezeichnet mit $CAM_1$, $CAM_2$, $CAM_3$ ..., allgemein $CAM_i$. Die Funkkennung $pID_n$ wechselt im gezeigten Beispiel nach den ersten drei Statusmeldungen 16 bzw. $CAM_1$, $CAM_2$, $CAM_3$ von $pID_1$ auf $pID_2$, usw. usf. Bei der i-ten Statusmeldung $CAM_i$ wird die n-te Funkkennung $pID_n$ verwendet (n << i).

Mit statistisch hoher Wahrscheinlichkeit können daher zwei aufeinanderfolgende Statusmeldungen 16 anhand ihrer gleichen Funkkennung $pID_i$ einander zugeordnet werden; lediglich beim Funkkennungswechsel $pID_n$ auf $pID_{n+1}$ ist eine direkte Korrelation der Statusmeldung 16 vor und nach dem Funkkennungswechsel nicht möglich. In diesem Fall kann eine Korrelation der Statusmeldungen 16 auch durch eine Mitverfolgung der Bewegungshistorie ("tracking") der Onboard-Unit 10 erfolgen, beispielsweise durch Auswertung deren Geschwindigkeit, Richtungsvektor usw., sei es, dass diese in den Statusmeldungen 16 von der OBU 10 selbst mitgeteilt werden oder von der Funkbake 3 gemessen werden. Auch könnten Eigenschaften des Fahrzeugs 9, das die OBU 10 mitführt, wie Fahrzeugbreite, -länge, -höhe usw., in der OBU 10 gespeichert und in ihren Statusmeldungen 16 mitgeteilt werden oder von der Funkbake 3 gemessen werden, um die Korrelationssicherheit zu erhöhen.

Gemäß den Fig. 1 - 3 ist damit eine Funkbake 3, welche die Statusmeldungen 16 aller in ihrem Funkabdeckungsbereich 4 passierenden OBUs 10 empfängt, in der Lage, die von einer bestimmten OBU 10 ausgehenden Statusmeldungen 16 anhand der Funkkennungen pID einander zuzuordnen und damit die Bewegungsbahn der OBU 10 aus den Positionen $P_i$ mitzuverfolgen. Zu diesem Zweck verfügt die Funkbake 3 gemäß Fig. 2 über einen Prozessor 17, einen Sendeempfänger 18 und einen vom Prozessor 17 abgearbeiteten Zuordnungsprozess 19, welcher den Strom von einlangenden Statusmeldungen 16 hinsichtlich korrelierender Funkkennungen pID filtert und die Positionen $P_i$ aus den einander zugeordneten Statusmeldungen 16 einem vom Prozessor 18 abgearbeiteten Tracking-Prozess 20 zuführt. Wenn die Funkkennungen pID direkt den Positionen $P_i$ oder daraus verallgemeinerten Geopositionen entsprechen, kann der Zuordnungsprozess 19 die gegenseitige Zuordnung der Statusmeldungen 16 auch anhand einer Bewegungshistorie ("tracking") der OBU 10 durchführen. Der Tracking-Prozess 20 vergleicht die so erhaltenen Po-

sitionen $P_i$ mit den vorgegebenen Orten 5 - 8, um Ortsnutzungen zu detektieren.

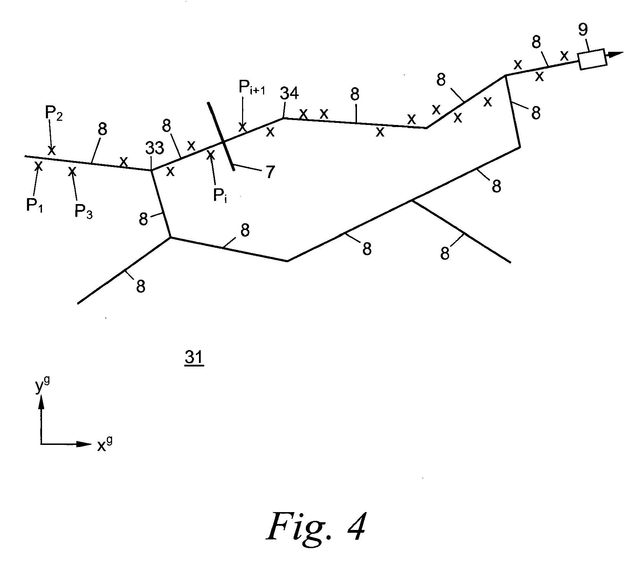

Die Ortsnutzung-Detektion kann auf verschiedene Arten erfolgen. Ist der zu detektierende Ort ein Punkt 5, kann beispielsweise eine Ortsnutzung detektiert werden, wenn eine vorgegebene Anzahl oder ein Mittelwert von Positionen $P_i$ innerhalb eines Maximalabstands $a_m$ vom Punkt 5 liegt. Wenn der Ort ein Bereich 6 ist, kann beispielsweise eine Ortsnutzung detektiert werden, wenn eine vorgegebene Anzahl oder ein Mittelwert von Positionen $P_i$ in den Bereich 6 fällt. Wenn der Ort ein Straßensegment 8 ist, kann eine Ortnutzung detektiert werden, wenn z.B. die Positionen $P_i$ das vollständige Befahren des Straßensegmentes 8 anzeigen, von dessen Anfang bis zu dessen Ende, oder das Befahren einer vorgegebenen Abfolge von mehreren aufeinanderfolgenden Straßensegmenten 8, od.dgl. Wenn der Ort eine Grenze 7 ist (welche im übrigen auch zur Begrenzung des Umfanges um den Punkt 5, des Bereichs 6 oder des Straßensegments 8 herangezogen werden kann), dann kann die Ortsnutzung als Grenzübertritt detektiert werden, und zwar in der später unter Bezugnahme auf die Fig. 4 - 6 erläuterten Art und Weise.

In einer vereinfachten Ausführungsform kann die Funkbake 3 bereits aus einer einzigen Statusmeldung 16 eine Ortsnutzung detektieren, sodass der Zuordnungsprozess 19 entfallen kann. In diesem Fall kann beispielsweise eine Ortsnutzung detektiert werden, wenn eine einzige Position $P_i$ innerhalb des Maximalabstands $a_m$ um den Punkt 5 liegt oder in den Bereich 6 oder auf ein Straßensegment 8 fällt. Wenn die Statusmeldung 16 zusätzliche Daten wie Geschwindigkeit und Bewegungsrichtung, insbesondere einen Bewegungsvektor M, der OBU 10 enthält, kann eine Ortsnutzung auch detektiert werden, wenn eine Extrapolation der Bewegung der OBU 10 in die Vergangenheit oder Zukunft ergibt, dass sie knapp zuvor, soeben oder in Kürze einen Ort benutzt hat, benutzt oder benutzen wird, z.B. die Grenze 7 überschritten hat oder überschreiten wird.

Sobald der Tracking-Prozess 20 eine Ortsnutzung detektiert, startet er eine für diese Ortsnutzung zuständige Dienstapplikation 21, welche vom Prozessor 17 abgearbeitet wird. Die Applikation 21 kann z.B. ein Protokollierungs-, Kontroll- oder Autorisierungsdienst sein, um die detektierte Ortsnutzung - für die OBU 10 identifiziert - aufzuzeichnen, zu überwachen oder weitere Schritte wie das Öffnen einer Zugangssperre zu autorisieren od.dgl. Im vorliegenden Beispiel ist die Dienstapplikation 21 ein Vermautungsdienst mit der Dienstidentifikation sID, welcher die Ortsnutzung für die OBU 10 vermauten (vergebühren) kann.

Die Dienstapplikation 21 sendet nun eine Identifikationsanfrage Id_Req 22, optional zusammen mit ihrer Dienstidentifikation sID, über den Sendeempfänger 18 an die OBU 10 mit jener Funkkennung pID, die in den vom Zuordnungsprozess 19 zugeordneten Statusmeldungen 16 angegeben war, siehe auch Fig. 3. Die Identifikationsanfrage 22 enthält bevorzugt ein kryptographisches Absenderzertifikat "Cert" 23 der Funkbake 3, um diese gegenüber der Onboard-Unit 10 zu authentifizieren.

Die durch die Funkkennung pID adressierte OBU 10 empfängt die Identifikationsanfrage 22 und leitet sie an den entsprechenden Prozess weiter, hier die Mautapplikation 14. Wenn die Identifikationsanfrage 22 ein Absenderzertifikat 23 enthält, kann die OBU 10 in einem optionalen Schritt 24 (Fig. 3) die Echtheit des Zertifikats 23 überprüfen; wenn dieses echt bzw. gültig (valid) ist, führt sie die weiteren Schritte aus; andernfalls wird die Identifikationsanfrage 22 ignoriert.

Die OBU 10 beantwortet die Identifikationsanfrage 22 durch Freigabe (Offenbarung) ihrer systemweit eindeutigen, d.h. auch über mehrere Wechsel der Funkkennung pID gleichbleibend eindeutigen Identifikation uID, siehe Deklarationsnachricht Id_Rsp 25, welche sie über den Sendeempfänger 13 an den Sendeempfänger 18 der Funkbake 3 zurücksendet. Die Deklarationsnachricht 25 kann die Dienstkennung sID der abfragenden Dienstapplikation 21 der Funkbake 3 enthalten, sodass die Deklarationsnachricht dort der richtigen Dienstapplikation 21 zugeführt werden kann.

Die OBU 10 ist ab nun mit ihrer eindeutigen Identifikation uID gegenüber der Dienstapplikation 21 identifiziert, und letztere mit ihrer Dienstkennung sID und ihrem Zertifikat 23 gegenüber der OBU 10 bzw. der Mautapplikation 14. Über die Funkschnittstelle 26 zwischen Sendeempfänger 13 der OBU 10 und Sendeempfänger 18 der Funkbake 3 können daher nun weitere dienstspezifische Nachrichten Svc_Msg 27 ausgetauscht werden. Die Nachrichten 27 können beispielsweise Datenpakete eines herkömmlichen Mautprotokolls zur Vermautung der Ortsnutzung sein. Die OBU-Identifikation uID kann dabei beispielsweise ein Mautkonto in der Funkbake 3 oder der Zentrale 2 referenzieren, welches mit Mautgebühren für die Ortsnutzung belastet wird. Alternativ könnte die Identifikation uID mit (zumindest) einer in der Funkbake 3 oder der Zentrale 2 vorgespeicherten berechtigten (Referenz-) Identifikation $uID_{ref}$ verglichen werden, wobei der Gleichheitsfall die Identifikation uID z.B. für einen Ortszutritt oder für den Erhalt einer Dienstleistung autorisiert.

Sobald die Funkbake 3 und die OBU 10 gegenseitig authentifiziert sind, insbesondere durch Auswertung des Absenderzertifikats 23 der Funkbake 3, können alle anschließenden Kommunikationen wie die Deklarationsnachricht 25 und die anschließenden Dienstnachrichten 27 verschlüsselt über die Funkschnittstelle 26 übertragen werden, z.B. als verschlüsselte point-to-point-Kommunikation. Ein solcher verschlüsselter Übertragungskanal könnte alternativ statt über die Funkschnittstelle 26 auch über ein (nicht dargestelltes) Mobiltelefonnetz errichtet werden, beispielsweise auch direkt zur Zentrale 2.

In einer vereinfachten Ausführungsform, in welcher die Funkbake 3 keine Vermautungsfunktion ausführt, sondern lediglich zur Identifikation der Fahrzeuge 9 bzw. OBUs 10 dient, können die ermittelten Identifikationen uID der Onboard-Units 10 - bevorzugt jeweils zusammen mit einem aktuellen Zeitstempel t - auch einfach nur für Protokollierungszwecke in einem Speicher 28 der Funkbake 3 oder Zentrale 2 aufgezeichnet werden.

In einem optionalen Schritt 27' kann die Funkbake 3 nach einer erfolgreichen Protokollierung, Autorisierung oder Vermautung einer Ortsnutzung eine Bestätigungsnachricht "ok" an die OBU 10 senden, in welcher sie (gegebenenfalls auch nochmals) eine eindeutige Bakenkennung bID sendet. Die OBU 10 kann Bakenkennungen bID, welche sie von Funkbaken 3 erhält, speichern und zumindest jeweils die zuletzt empfangene Bakenkennung bID in einer (oder mehreren) ihrer Statusmeldungen 16 und/oder bei der Offenbarung ihrer Identifikation uID im Schritt 25 an eine Funkbake 3 senden. Die Funkbake 3 kann dadurch solche Statusmeldungen 16 und/oder Identifikations-Sendungen 25 ignorieren bzw. ausblenden, mit denen sie eine Bakenkennung bID mitempfängt, die gleich ihrer eigenen Bakenkennung bID ist, um eine Doppelverarbeitung ein und derselben passierenden OBU 10 zu vermeiden.

Bei der Detektion von Ortsnutzungen im Tracking-Prozess 20 können die Positionen $P_i$ einer OBU 10 durch Vergleich mit bekannten Referenzpositionen - oder zumindest denselben Messfehlern unterliegenden Drittpositionen - verbessert werden, wie auf dem Gebiet von Differential-GPS (dGPS) bekannt. So kann beispielsweise die Funkbake 3 einen eigenen Satellitennavigationsempfänger (nicht gezeigt) haben, der Referenz-Positionen $P_{ref,i}$ der Funkbake 3 zu etwa denselben Zeitpunkten, zu denen die Positionen $P_i$ erstellt werden, misst. In Kenntnis der vorbekannten Position einer ortsfesten Funkbake 3 können dann die satellitennavigationsbestimmten Positionen $P_i$ auf die - etwa gleichartigen Messfehlern unterliegenden - Referenzpositionen $P_{ref,i}$ bezogen und damit Messfehler kompensiert werden, siehe Pfad 29 in Fig. 2. In derselben Weise könnten auch die jeweils zu ähnlichen Zeitpunkten von Nachbar-OBUs 10 ermittelten Positionen $P_i$ für die Messfehlerbereinigung der von einer interessierenden OBU 10 erzeugten Positionen $P_i$ herangezogen werden.

Die Fig. 4 - 6 zeigen ein besonders geeignetes Verfahren zur Detektion einer Ortsnutzung im Rahmen des Tracking-Prozesses 20. Das Verfahren der Fig. 4 - 6 wird insbesondere zur Detektion eines Übertritts der Grenze 7 eingesetzt, welche Grenze 7 beispielsweise auch die Umgrenzung des Bereichs 6, der Umfang um den Punkt 5 oder eine Umrandung des Straßensegments 7 sein kann.

Fig. 4 zeigt ausschnittsweise eine digitale Straßenkarte 31 mit einer Vielzahl von Straßensegmenten 8, die ein Straßennetz bilden. Die Straßensegmente 8 sind vektorisiert, d.h. jeweils durch ihren Anfangs- und Endpunkt 33, 34 in einem globalen Koordinatensystem $x^g/y^g$ der Straßenkarte 31 definiert, wie in der Technik bekannt.

Zumindest eine virtuelle Grenze 7 wird von einem der Straßensegmente 8 gekreuzt. Die Grenze 7 kann auch am Anfangs- oder Endpunkt 33, 34 eines Straßensegments 8 liegen, d.h. an der Verbindungsstelle zweier oder mehrerer Straßensegmente 8; in diesem Fall kann sie als einem dieser Straßensegmente 8 zugeordnet betrachtet werden.

Die Grenze 7 kann als vektorisierte Strecke mit einem Anfangspunkt $T_1$ und einem Endpunkt $T_2$ definiert sein, woraus unmittelbar ihr Schnittpunkt $T_0$ mit dem querenden Straßensegment 8 bestimmt werden kann. Alternativ kann die Grenze 7 auch direkt als dieser Schnittpunkt $T_0$ definiert werden.

Die Bewegung eines Fahrzeugs 9, das mittels der OBU 10 fortlaufend Positionen $P_i$ ("position fixes") im globalen Koordinatensystem $x^g/y^g$ bestimmt, ist auf der Straßenkarte 31 durch die Folge von Positionen $P_1$, $P_2$, ..., $P_i$, ... repräsentiert. In dem in Fig. 4 gezeigten Beispiel befährt das Fahrzeug 9 den oben dargestellten Straßenzug, darunter auch das Straßensegment 8 mit der Grenze 7. Das Passieren der Grenze 7 durch das Fahrzeug 9 wird durch Auswertung der Positionen $P_i$ wie folgt detektiert.

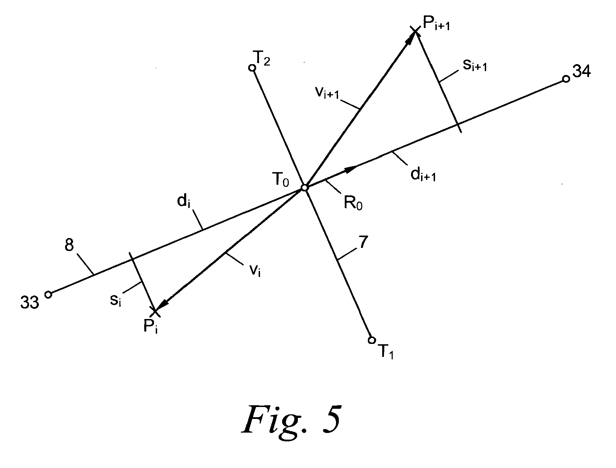

Fig. 5 zeigt zwei beispielhafte aufeinanderfolgende Positionen $P_i$, $P_{i+1}$, die unmittelbar vor und nach der Grenze 7 bestimmt wurden. Aufgrund von Ungenauigkeiten der Positionsbestimmung, z.B. GNSS-Ungenauigkeiten, liegen die Positionen $P_i$, $P_{i+1}$ in der Regel nicht genau auf dem Straßensegment 8 sondern in einem Normalabstand $s_i$ bzw. $S_{i+1}$ zu diesem.

Für jede Position $P_i$ der Folge von Positionen, hier beispielhaft $P_i$ und $P_{i+1}$, wird ein Vektor $v_i$ zwischen dieser Position und dem Schnittpunkt $T_0$ der Grenze 7 mit dem Straßensegment 8 berechnet. Die Vektoren $v_i$ werden anschließend - oder sofort nach ihrer Berechnung - jeweils auf das Straßensegment 8 projiziert, genauer auf eine Referenzrichtung $R_0$ des Straßensegments 8, so dass eine Folge von Projektionen $d_i$ erhalten wird. Die Referenzrichtung $R_0$ liegt in der Orientierung des Straßensegments 8 und hat bevorzugt - auch wenn es nicht zwingend ist - die Länge eins (Einheitsvektor).

In der in Fig. 5 gezeigten Ausführungsform werden die Projektionen $d_i$ durch Bilden jeweils eines vektoriellen Inprodukts zwischen den Vektoren $v_i$ und der Referenzrichtung $R_0$ gebildet, d.h.

$$d_1 = \overrightarrow{T_0P_1} \cdot \overrightarrow{R_0} = \overrightarrow{v_1} \cdot \overrightarrow{R_0}$$

$$\vdots$$

$$d_i = \overrightarrow{T_0P_i} \cdot \overrightarrow{R_0} = \overrightarrow{v_i} \cdot \overrightarrow{R_0}$$

$$d_{i+1} = \overrightarrow{T_0P_{i+1}} \cdot \overrightarrow{R_0} = \overrightarrow{v_{i+1}} \cdot \overrightarrow{R_0}$$

$$\vdots$$

Wenn in der so erzeugten Folge von Projektionen (In-

produkten) $d_i$ ein Vorzeichenwechsel (Richtungswechsel) auftritt, dann wurde die Grenze 7 überschritten und ein Grenzübertritt wird detektiert.

Optional kann zusätzlich überprüft werden, ob die Beträge der beiden vor und nach dem Richtungs- bzw. Vorzeichenwechsel liegenden Projektionen $d_i$, $d_{i+1}$ ein vorgegebenes Minimum min überschreiten, d.h. $|d_i| > min$ und $[d_{i+1}] > min$ ist. Wenn ja, wird der zuvor detektierte Grenzübertritt akzeptiert ("validiert"). Dadurch können Fehldetektionen durch Positionsungenauigkeiten verhindert werden.

Als weitere Validierungsstufe können auch die Normalabstände $s_i$ der Positionen $P_i$ vom Straßensegment 8 ausgewertet werden. Dazu wird überprüft, ob die beiden Normalabstände $s_i$, $s_{i+1}$ vor und nach dem zuvor detektieren Richtungs- bzw. Vorzeichenwechsel kleiner sind als vorgegebene Maxima $max_1$, $max_2$, $max_3$, d.h. $|s_i| < max_1$ und $|s_{i+1}| < max_2$, wobei die Maxima $max_1$ und $max_2$ auch gleich sein können, und/oder $|s_i - s_{i+1}| < max_3$. Mit dieser Überprüfung können Fehldetektionen z.B. bei der Befahrung von naheliegenden parallelen Straßensegmenten 8, die keine Grenzen 7 haben, ausgeschlossen werden.

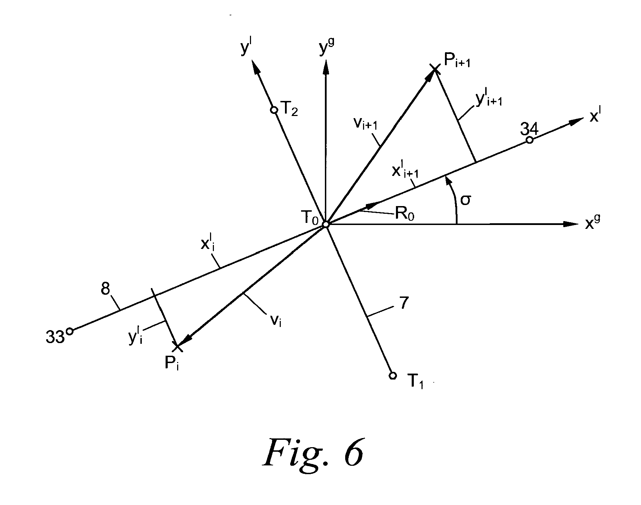

Fig. 6 zeigt eine alternative Ausführungsform zur Berechnung der Projektionen $d_i$ der Vektoren $v_i$. Hier wird aus der Referenzrichtung $R_0$ ein lokales Koordinatensystem $x^1/y^1$ mit der Referenzrichtung $R_0$ als x-Achse $x^1$ aufgestellt, und die im globalen Koordinatensystem $x^g/y^g$ berechneten Vektoren $v_i$ werden in das lokale Koordinatensystem $x^1/y^1$ transformiert, u.zw. durch Anwendung der Rotationsmatrix

$$R = \begin{bmatrix} \cos\sigma & -\sin\sigma \\ \sin\sigma & \cos\sigma \end{bmatrix}$$

mit $\sigma$ ... Winkel zwischen $x^1$ und $x^g$.

Die in das lokale Koordinatensystem $x^1/y^1$ transformierten Vektoren $v^1_i$ ergeben sich damit zu

$$\vec{v_i^l} = R^{-1}\vec{v_i} = \begin{bmatrix} x_i^l \\ y_i^l \end{bmatrix}$$

$$\vec{v_{i+1}^l} = R^{-1}\vec{v_{i+1}} = \begin{bmatrix} x_{i+1}^l \\ y_{i+1}^l \end{bmatrix}$$

Die x-Koordinaten $x^1_i$ und $x^1_{i+1}$ der transformierten Vektoren $v^1_i$, $v^1_{i+1}$ entsprechen wiederum den Projektionen $d_i$ und $d_{i+1}$. Ein Vorzeichenwechsel, wie er zwischen den Projektionen $x^1_i = d_i$ und $x^l_{i+1} = d_{i+1}$ auftritt, zeigt wieder den Grenzübertritt an.

Auch hier können die Projektionen $x^1_i$, $x^1_{i+1}$ in der oben genannten Weise zusätzlich auf Überschreiten des Minimums min überprüft werden, d.h. ob $|x^1_i| > min$ und $|x^1_{i+1}| > min$ ist.

Die y-Koordinaten $y^1_i$ und $y^1_{i+1}$ der transformierten Vektoren $v^1_i$, $v^1_{i+1}$ entsprechen den Normalabständen $s_i$, $s_{i+1}$ und können wieder auf Einhaltung der Maximalgrenzen $max_1$, $max_2$, $max_3$ überprüft werden, d.h. ob $|y^1_i| < max_1$ und $|y^1_{i+1}| < max_2$ ist und/oder $|y^1_i - y^1_{i+1}| < max_3$ ist.

Zusätzlich zu der geschilderten Auswertung der Positionen $P_i$ können weitere Messwerte der Positionsbestimmung wie Orientierung, Geschwindigkeiten, Pseudoranges usw. aus einer GNSS-Positionsbestimmung zur Verbesserung bzw. Validierung der Detektion des Übertritts der Grenze 7 herangezogen werden.

Die Erfindung ist nicht auf die dargestellten Ausführungsformen beschränkt, sondern umfasst alle Varianten und Modifikationen, die in den Rahmen der angeschlossenen Ansprüche fallen.

**Patentansprüche**

1. Verfahren zur Identifizierung eines einen vorgegebenen Ort (5 - 8) nutzenden Fahrzeugs (9), umfassend:

   auf dem Fahrzeug (9) Mitführen einer Onboard-Unit (10), die wiederholt Statusmeldungen (16) über Funk aussendet, welche jeweils eine aktuelle Position ($P_i$) der Onboard-Unit (10) und eine nach jeweils einer oder mehreren Statusmeldungen (16) wechselnde Funkkennung (pID) angeben,
   Empfangen zumindest einer Statusmeldung (16) in einer Funkbake (3),
   Detektieren einer Ortsnutzung des Fahrzeugs (9) durch Auswerten der zumindest einen Statusmeldung (16) anhand der darin angegebenen Position(en) ($P_i$) bezüglich des vorgegebenen Orts (5 - 8),
   Senden einer Identifikationsanfrage (22) von der Funkbake (3) an die durch die Funkkennung (pID) aus der zumindest einen Statusmeldung (16) adressierte Onboard-Unit (10),
   Empfangen und Berechtigungsprüfen (24) der Identifikationsanfrage (22) in der Onboard-Unit (10) und, wenn die Anfrage (22) berechtigt ist,
   Senden (25) einer über mehrere Funkkennungswechsel gleichbleibenden eindeutigen Identifikation (uID) der Onboard-Unit (10) an die Funkbake (3).

2. Verfahren nach Anspruch 1, **dadurch gekennzeichnet, dass** zumindest zwei Statusmeldungen (16) in einer Funkbake (3) empfangen und anhand der darin angegebenen Funkkennungen (pID) einander zugeordnet werden, und

dass die Ortsnutzung des Fahrzeugs (9) durch Auswerten der einander zugeordneten Statusmeldungen (16) anhand der darin angegebenen Positionen ($P_i$) bezüglich des vorgegebenen Orts (5 - 8) detektiert wird.

3. Verfahren nach Anspruch 1 oder 2, **dadurch gekennzeichnet, dass** das Berechtigungsprüfen (24) durch Überprüfen eines von der Funkbake (3) mit der Identifikationsanfrage (22) mitgesandten kryptographischen Absenderzertifikats (23) der Funkbake (3) erfolgt.

4. Verfahren nach einem der Ansprüche 1 bis 3, **dadurch gekennzeichnet, dass** die Identifikation (uID) der Onboard-Unit (10) über einen verschlüsselten Kanal (26) an die Funkbake (3) gesendet wird.

5. Verfahren nach einem der Ansprüche 1 bis 4, **dadurch gekennzeichnet, dass** die in der Funkbake (3) empfangene Identifikation (uID) zusammen mit einem Zeitstempel (t) in einem Speicher (28) aufgezeichnet wird, um die Ortsnutzung zu protokollieren.

6. Verfahren nach einem der Ansprüche 1 bis 4, **dadurch gekennzeichnet, dass** die in der Funkbake (3) empfangene Identifikation (uID) mit zumindest einer vorgespeicherten berechtigten Identifikation ($uID_{ref}$) verglichen wird, um die Ortsnutzung zu autorisieren.

7. Verfahren nach einem der Ansprüche 1 bis 4, **dadurch gekennzeichnet, dass** die in der Funkbake (3) empfangene Identifikation (uID) zum Aufsuchen und Belasten eines der Identifikation (uID) zugeordneten Mautkontos verwendet wird, um die Ortsnutzung zu vermauten.

8. Verfahren nach einem der Ansprüche 5 bis 7, **dadurch gekennzeichnet,**
**dass** die Funkbake (3) nach Protokollierung, Autorisierung oder Vermautung der Ortsnutzung eine für die Funkbake eindeutige Bakenkennung (bID) an die Onboard-Unit (10) sendet (27'), welche diese speichert und bei zumindest einem nächsten Aussenden ihrer Statusmeldung(en) (16) oder Senden ihrer Identifikation (uID) mitsendet, und
**dass** die Funkbake (3) eine von einer Onboard-Unit (10) empfangene Statusmeldung (16) oder Identifikation (uID) ignoriert, wenn die dazu mitempfangene Bakenkennung (bID) gleich ihrer eigenen Bakenkennung (bID) ist.

9. Verfahren nach einem der Ansprüche 1 bis 8, **dadurch gekennzeichnet, dass** mehr als zwei Statusmeldungen (16) empfangen und einander zugeordnet werden und aus den darin angegebenen Positionen ($P_i$) eine Bewegungsbahn der Onboard-Unit (10) berechnet wird, welche zur Detektion der Ortsnutzung mit dem vorgegebenen Ort (5 - 8) verglichen wird.

10. Verfahren nach einem der Ansprüche 1 bis 9, **dadurch gekennzeichnet, dass** die Funkkennung (pID) nach jeweils etwa 5 bis 1000, bevorzugt 20 bis 100, Statusmeldungen (16) gewechselt wird.

11. Verfahren nach einem der Ansprüche 1 bis 9, **dadurch gekennzeichnet, dass** die Funkkennung (pID) frühestens nach Ablauf einer vorgegebenen Zeitspanne gewechselt wird.

12. Verfahren nach einem der Ansprüche 1 bis 9, **dadurch gekennzeichnet, dass** die Funkkennung (pID) nicht gewechselt wird, solange sich die Onboard-Unit (10) im Funkabdeckungsbereich (4) ein und derselben Funkbake (3) befindet.

13. Verfahren nach einem der Ansprüche 1 bis 12, **dadurch gekennzeichnet, dass** jede Statusmeldung (16) auch einen aktuellen Bewegungsvektor (M) der Onboard-Unit (10) angibt, welcher beim Detektieren der Ortsnutzung mitverwendet wird.

14. Verfahren nach einem der Ansprüche 1 bis 13, **dadurch gekennzeichnet, dass** die Position ($P_i$) der Onboard-Unit (10) mittels Satellitennavigation (11) bestimmt und durch Bezugnahme auf eine mittels Satellitennavigation bestimmte Referenzposition (29) der Funkbake (3) verbessert wird.

15. Verfahren nach einem der Ansprüche 1 bis 14, **dadurch gekennzeichnet, dass** die Position ($P_i$) der Onboard-Unit (10) mittels Satellitennavigation (11) bestimmt und durch Bezugnahme auf mindestens eine weitere mittels Satellitennavigation bestimmte Position ($P_i$) einer benachbarten Onboard-Unit (10) verbessert wird.

16. Verfahren nach einem der Ansprüche 1 bis 15, **dadurch gekennzeichnet, dass** der Funkabdeckungsbereich (4) der Funkbake (3) den vorgegebenen Ort (5 - 8) enthält.

17. Verfahren nach einem der Ansprüche 1 bis 16, **dadurch gekennzeichnet, dass** der Ort ein geographischer Punkt (5) und die Ortsnutzung ein Unterschreiten eines Maximalabstands ($a_m$) zu dem Punkt ist.

18. Verfahren nach einem der Ansprüche 1 bis 16, **dadurch gekennzeichnet, dass** der Ort zumindest ein Straßensegment (8) und die Ortsnutzung ein Befahren des zumindest einen Straßensegments (8) ist.

**19.** Verfahren nach einem der Ansprüche 1 bis 16, **dadurch gekennzeichnet, dass** der Ort eine Grenze (7) und die Ortsnutzung ein Grenzübertritt ist, wobei die Grenzen auf einer digitalen Straßenkarte (1) mit vektorisierten Straßensegmenten (8) repräsentiert werden, umfassend:

Bestimmen eines Schnittpunkts ($T_0$) der Grenze (7) mit einem Straßensegment (8) und einer Referenzrichtung ($R_0$) in der Orientierung dieses Straßensegments (8), fortlaufendes Projizieren von Vektoren ($v_i$), die jeweils zwischen einer der Positionen ($P_i$) aus den genannten Statusmeldungen und dem Schnittpunkt ($T_0$) bestimmt werden, auf die Referenzrichtung ($R_0$), um eine Folge von Projektionen ($d_i$, $d_{i+1}$; $x^1_i$, $x^1_{i+1}$) zu erhalten, und Detektieren des Grenzübertritts, wenn in der Folge von Projektionen ($d_i$, $d_{i+1}$; $x^1_i$, $x^1_{i+1}$) ein Richtungs- oder Vorzeichenwechsel eintritt.

**20.** Verfahren nach Anspruch 19, **dadurch gekennzeichnet, dass** das Projizieren durch Bilden von vektoriellen Inprodukten ($d_i$, $d_{i+1}$) der Vektoren ($v_i$) mit der Referenzrichtung ($R_0$) erfolgt und ein Grenzübertritt bei einem Vorzeichenwechsel der Inprodukte detektiert wird.

**21.** Verfahren nach Anspruch 19, **dadurch gekennzeichnet, dass** das Projizieren durch Transformieren der Vektoren ($v^1_i$) in ein lokales Koordinatensystem ($x^1/y^1$) mit der Referenzrichtung ($R_0$) als x-Achse ($x^1$) erfolgt und ein Grenzübertritt bei einem Vorzeichenwechsel ihrer x-Koordinaten ($x^1_i$, $x^1_{i+1}$) detektiert wird.

**22.** Verfahren nach einem der Ansprüche 19 bis 21, **gekennzeichnet durch** den weiteren Schritt des Validierens des Grenzübertritts, wenn die Beträge der beiden vor und nach dem Richtungs- bzw. Vorzeichenwechsel liegenden Projektionen ($d_i$, $d_{i+1}$; $x^1_i$, $x^1_{i+1}$) ein vorgegebenes Minimum (min) überschreiten.

**23.** Verfahren nach einem der Ansprüche 19 bis 21, **gekennzeichnet durch** den weiteren Schritt des Validierens des Grenzübertritts, wenn die Normalabstände ($s_i$, $s_{i+1}$; $y^1_i$, $y^1_{i+1}$) der beiden vor und nach dem Richtungs- bzw. Vorzeichenwechsel liegenden Positionen ($P_i$, $P_{i+1}$) zur Referenzrichtung ($R_0$) ein vorgegebenes Maximum ($max_1$, $max_2$, $max_3$) nicht überschreiten.

**24.** Funkbake (3) zur Identifizierung eines einen vorgegebenen Ort (5 - 8) nutzenden Fahrzeugs (9), das eine Onboard-Unit (10) mitführt, die wiederholt Statusmeldungen (16) über Funk aussendet, welche jeweils eine aktuelle Position ($P_i$) der Onboard-Unit (10) und eine nach jeweils einer oder mehreren Statusmeldungen (16) wechselnde Funkkennung (pID) angeben, **dadurch gekennzeichnet, dass** sie dafür ausgebildet ist, mit Hilfe eines Prozessors (17) und eines daran angeschlossenen Sendeempfängers (18) zumindest eine Statusmeldung (16) zu empfangen, eine Ortsnutzung durch Auswerten (20) der zumindest einen Statusmeldung (16) anhand der darin angegebenen Position(en) ($P_i$) bezüglich des vorgegebenen Orts (5 - 8) zu detektieren, eine Identifikationsanfrage (22) an die durch die Funkkennungen (pID) aus der zumindest einen Statusmeldung (16) adressierbare Onboard-Unit (10) zu senden, und daraufhin eine über mehrere Funkkennungswechsel gleichbleibende eindeutige Identifikation (uID) der Onboard-Unit (10) zu empfangen (25).

**25.** Funkbake nach Anspruch 24, **dadurch gekennzeichnet, dass** sie dafür ausgebildet ist, zumindest zwei Statusmeldungen (16) zu empfangen und anhand der darin angegebenen Funkkennungen (pID) einander zuzuordnen (19), und die Ortsnutzung des Fahrzeugs (9) durch Auswerten der einander zugeordneten Statusmeldungen (16) anhand der darin angegebenen Positionen ($P_i$) bezüglich des vorgegebenen Orts (5 - 8) zu detektieren.

**26.** Funkbake nach Anspruch 24 oder 25, **dadurch gekennzeichnet, dass** sie ein kryptographisches Absenderzertifikat (23) enthält und dafür ausgebildet ist, dieses mit der Identifikationsanfrage (22) mitzusenden.

**27.** Onboard-Unit, mit einem Prozessor (12), einem Satellitennavigationsempfänger (11) zur Positionsbestimmung und einem Sendeempfänger (13) zur Funkkommunikation, wobei die Onboard-Unit (10) dafür ausgebildet ist, mit Hilfe des Sendeempfängers (13) wiederholt Statusmeldungen (16) über Funk auszusenden, welche jeweils eine vom Satellitennavigationsempfänger (11) bestimmte Position ($P_i$) und eine nach jeweils mehreren Statusmeldungen (16) wechselnde Funkkennung (pID) der Onboard-Unit (10) enthalten, **dadurch gekennzeichnet, dass** sie weiters dafür ausgebildet ist, eine an ihre aktuelle Funkkennung (pID) adressierte und ein kryptographisches Absenderzertifikat (23) enthaltende Identifikationsanfrage (22) von einer Funkbake (3) zu empfangen, das Absenderzertifikat (23) zu validieren (24) und, wenn es valid ist, eine über mehrere Funkkennungswechsel gleichbleibende eindeutige Identifikation (uID) der Onboard-Unit (10) an die Funkbake (3) zu senden (25).

**28.** Onboard-Unit nach Anspruch 27, **dadurch gekenn-**

**zeichnet, dass** ihre Statusmeldungen (16) CAM-Nachrichten nach dem ITS-G5-Standard oder BSM-Nachrichten nach dem WAVE-Standard sind.

## Claims

1. A method for identifying a vehicle (9) using a predetermined location (5-8), comprising:

   carrying, on the vehicle (9), an onboard unit (10) that via radio repeatedly broadcasts status messages (16), which each indicate a current position $(P_i)$ of the onboard unit (10) and a radio identifier (pID) that changes after each or several status messages (16);
   receiving at least one status message (16) in a radio beacon (3);
   detecting a location usage of the vehicle (9) by evaluating the at least one status message (16) based on the position(s) $(P_i)$ indicated therein with respect to the predetermined location (5-8);
   transmitting an identification request (22) from the radio beacon (3) to that onboard unit (10) which is addressed by way of the radio identifier (pID) from the at least one status message (16);
   receiving and conducting a legitimacy check (24) of the identification request (22) in the onboard unit (10) and, if the request (22) is legitimate, transmitting (25) a unique identification (uID) of the onboard unit (10) to the radio beacon (3), the unique identification remaining the same over several changes of radio identifier.

2. The method according to claim 1, **characterized in that** at least two status messages (16) are received by a radio beacon (3) and are associated with each other based on the radio identifiers (pID) indicated therein, and
   the location usage of the vehicle (9) is detected by evaluating the mutually associated status messages (16) based on the positions $(P_i)$ indicated therein with respect to the predetermined location (5-8).

3. The method according to claim 1 or 2, **characterized in that** the legitimacy check (24) is done by checking a cryptographic sender certificate (23) of the radio beacon (3) that is transmitted by the radio beacon (3) along with the identification request (22).

4. The method according to any one of claims 1 to 3, **characterized in that** the identification (uID) of the onboard unit (10) is transmitted to the radio beacon (3) via an encrypted channel (26).

5. The method according to any one of claims 1 to 4, **characterized in that** the identification (uID) received by the radio beacon (3) is recorded together with a time stamp (t) in a memory (28) so as to log the location usage.

6. The method according to any one of claims 1 to 4, **characterized in that** the identification (uID) received by the radio beacon (3) is compared to at least one previously stored legitimate identification $(uID_{ref})$ so as to authorize the location usage.

7. The method according to any one of claims 1 to 4, **characterized in that** the identification (uID) received by the radio beacon (3) is used to search for and debit a toll account associated with the identification (uID) so as to toll the location usage.

8. The method according to any one of claims 5 to 7, **characterized in that**
   the radio beacon (3) transmits (27') a beacon identifier (bID) that is unique to the radio beacon to the onboard unit (10) after logging, authorization or tolling of the location usage, the onboard unit storing this identifier and transmitting the same at least along with a subsequent broadcast of the status message(s) (16) thereof or transmission of the identification (uID) thereof, and
   the radio beacon (3) ignores a status message (16) or identification (uID) received from an onboard unit (10) if the beacon identifier (bID) received along therewith is identical to its own beacon identifier (bID).

9. The method according to any one of claims 1 to 8, **characterized in that** more than two status messages (16) are received and associated with each other, and a trajectory of the onboard unit (10) is calculated based on the positions $(P_i)$ indicated therein, the trajectory being compared to the predetermined location (5-8) so as to detect the location usage.

10. The method according to any one of claims 1 to 9, **characterized in that** the radio identifier (pID) is changed after every approximately 5 to 1000, preferably 20 to 100, status messages (16).

11. The method according to any one of claims 1 to 9, **characterized in that** the radio identifier (pID) is changed at the earliest after expiration of a predetermined time period.

12. The method according to any one of claims 1 to 9, **characterized in that** the radio identifier (pID) is kept the same while the onboard unit (10) is present in the radio coverage range (4) of one and the same radio beacon (3).

13. The method according to any one of claims 1 to 12, **characterized in that** each status message (16) also indicates a current movement vector (M) of the onboard unit (10) that is also used during the detection of the location usage.

14. The method according to any one of claims 1 to 13, **characterized in that** the position $(P_i)$ of the onboard unit (10) is determined by way of satellite navigation (11) and improved by referencing to a reference position (29) of the radio beacon (3) that was determined by way of satellite navigation.

15. The method according to any one of claims 1 to 14, **characterized in that** the position $(P_i)$ of the onboard unit (10) is determined by way of satellite navigation (11) and improved by referencing to at least one further position $(P_i)$ of a neighboring onboard unit (10) that was determined by way of satellite navigation.

16. The method according to any one of claims 1 to 15, **characterized in that** the radio coverage range (4) of the radio beacon (3) contains the predetermined location (5-8).

17. The method according to any one of claims 1 to 16, **characterized in that** the location is a geographical point (5) and the location usage is a drop below a maximum distance $(a_m)$ from the point.

18. The method according to any one of claims 1 to 16, **characterized in that** the location is at least one road segment (8) and the location usage is the travel on the at least one road segment (8).

19. The method according to any one of claims 1 to 16, **characterized in that** the location is a boundary (7) and the location usage is a crossing of the boundary, wherein the boundaries are represented on a digital road map (1) with vectorized road segments (8), comprising:

> determining a point of intersection $(T_0)$ of the boundary (7) with a road segment (8) and a reference direction $(R_0)$ in the orientation of this road segment (8);
> successively projecting vectors $(v_i)$, each determined between one of the positions $(P_i)$ from the aforementioned status messages and the point of intersection (To), onto the reference direction $(R_0)$, in order to obtain a sequence of projections $(d_i, d_{i+1}; x^1_i, x^1_{i+1})$; and
> detecting a crossing of the boundary if a change of direction or sign occurs in the sequence of projections $(d_i, d_{i+1}; x^1, x^1_{i+1})$.

20. The method according to claim 19, **characterized in that** the projecting is done by forming vectorial inner products $(d_i, d_{i+1})$ of the vectors $(v_i)$ with the reference direction $(R_0)$, and a crossing of the boundary is detected by a change of sign of the inner products.

21. The method according to claim 19, **characterized in that** the projecting is done by transforming the vectors $(v^1_i)$ into a local coordinate system $(x^1/y^1)$ with the reference direction $(R_0)$ as the x-axis $(x^1)$, and a crossing of the boundary is detected by a change of sign of their x-coordinates $(x^1_i, x^1_{i+1})$.

22. The method according to any one of claims 19 to 21, **characterized by** the additional step of validating the crossing of the boundary if the absolute values of the two projections $(d_i, d_{i+1}; x^1, x^1_{i+1})$ lying before and after the change of direction or sign exceed a predetermined minimum (min).

23. The method according to any one of claims 19 to 21, **characterized by** the additional step of validating the crossing of the boundary if the normal distances $(s_i, s_{i+1}; y^1, y^1_{i+1})$ of the two positions $(P_i, P_{i+1})$ lying before and after the change of direction or sign from the reference direction $(R_0)$ do not exceed a predetermined maximum $(max_1, max_2, max_3)$.

24. A radio beacon (3) for identifying a vehicle (9) using a predetermined location (5-8), the vehicle carrying an onboard unit (10) that via radio repeatedly broadcasts status messages (16), which each indicate a current position $(P_i)$ of the onboard unit (10) and a radio identifier (pID) that changes after each or several status messages (16), **characterized by** being configured to, with the aid of a processor (17) and a transceiver (18) connected thereto,
receive at least one status message (16);
detect a location usage by evaluating (20) the at least one status message (16) based on the position(s) $(P_i)$ indicated therein with respect to the predetermined location (5-8);
transmit an identification request (22) to that onboard unit (10) which is addressable by way of the radio identifier (pID) from the at least one status message (16); and then
to receive (25) a unique identification (uID) of the onboard unit (10) that remains the same over several radio identifier changes.

25. The radio beacon according to claim 24, **characterized by** being configured to
receive at least two status messages (16) and associate (19) these with each other based on the radio identifiers (pID) indicated therein, and
detect the location usage of the vehicle (9) by evaluating the mutually associated status messages (16) based on the positions $(P_i)$ indicated therein with respect to the predetermined location (5-8).

26. The radio beacon according to claim 24 or 25, **char-**

**acterized by** containing a cryptographic sender certificate (23) and by being configured to transmit the same along with the identification request (22).

27. An onboard unit, comprising a processor (12), a satellite navigation receiver (11) for position determination, and a transceiver (13) for radio communication, wherein the onboard unit (10) is configured to, with the aid of the transceiver (13), repeatedly broadcast via radio status messages (16), which each contain a position ($P_i$) determined by the satellite navigation receiver (11) and a radio identifier (pID) of the onboard unit (10) that changes after several status changes (16), **characterized by** further being configured to

receive, from a radio beacon (3), an identification request (22) that is addressed to the current radio identifier (pID) of the unit and contains a cryptographic sender certificate (23);

validate (24) the sender certificate (23); and if the same is valid,

to transmit (25) a unique identification (uID) of the onboard unit (10) to the radio beacon (3), the identification remaining the same over several changes of radio identifier.

28. The onboard unit according to claim 27, **characterized in that** the status messages (16) thereof are CAMs according to the ITS-G5 standard or BSMs according to the WAVE standard.

**Revendications**

1. Procédé pour l'identification d'un véhicule (9) utilisant un lieu prédéterminé (5-8), comprenant :

   l'embarcation d'une unité de bord (10) dans le véhicule (9), laquelle émet par radio, de façon répétée, des messages de statut (16) indiquant respectivement une position actuelle ($P_i$) de l'unité de bord (10) et une identification radio (pID) variant respectivement selon un ou plusieurs messages de statut (16),

   la réception d'au moins un message de statut (16) dans une balise (3),

   la détection d'une utilisation de lieu par le véhicule (9) par l'évaluation de l'au moins un message de statut (16) à l'aide de la/des position(s) ($P_i$) indiquée(s) dans celui-ci quant au lieu prédéterminé (5-8),

   l'envoi d'une demande d'identification (22) de la balise (3) à l'unité de bord (10) adressée par l'identification radio (pID) à partir de l'au moins un message de statut (16),

   réception et contrôle d'autorisation (24) de la demande d'identification (22) dans l'unité de bord (10) et, si la demande (22) est autorisée, envoi (25) d'une identification univoque (uID) de l'unité de bord (10), demeurant constante lors de plusieurs changements d'identification radio, à la balise (3).

2. Procédé selon la revendication 1, **caractérisé en ce qu'**au moins deux messages de statut (16) sont reçus dans une balise (3) et attribués les uns aux autres à l'aide des identifications radio (pID) indiquées dans ceux-ci, et

   **en ce que** l'utilisation du lieu par le véhicule (9) est détectée par l'évaluation des messages de statut (16) attribués les uns aux autres, à l'aide des positions ($P_i$) indiquées dans ceux-ci quant au lieu prédéterminé (5-8).

3. Procédé selon la revendication 1 ou 2, **caractérisé en ce que** le contrôle d'autorisation (24) est effectué par le contrôle d'un certificat d'expéditeur cryptographique (23) de la balise (3) envoyé par la balise (3) ensemble avec la demande d'identification (22).

4. Procédé selon l'une des revendications 1 à 3, **caractérisé en ce que** l'identification (uID) de l'unité de bord (10) est envoyée à la balise (3) par un canal crypté (26).

5. Procédé selon l'une des revendications 1 à 4, **caractérisé en ce que** l'identification (uID) reçue dans la balise (3) est enregistrée dans une mémoire (28), ensemble avec un horodatage (t), pour journaliser l'utilisation de lieu.

6. Procédé selon l'une des revendications 1 à 4, **caractérisé en ce que** l'identification (uID) reçue dans la balise (3) est comparée avec au moins une identification autorisée préenregistrée ($uID_{ref}$), afin d'autoriser l'utilisation de lieu.

7. Procédé selon l'une des revendications 1 à 4, **caractérisé en ce que** l'identification (uID) reçue dans la balise (3) est utilisée pour rechercher et débiter un compte de péage attribué à l'identification (uID), pour le paiement de l'utilisation de lieu.

8. Procédé selon l'une des revendications 5 à 7, **caractérisé en ce que**

   suite à la journalisation, à l'autorisation ou au débit de l'utilisation de lieu, la balise (3) envoie (27') une identification de balise (bID) univoque pour la balise à l'unité de bord (10), laquelle l'enregistre et l'envoie conjointement lors d'au moins un prochain envoi de son/ses message(s) de statut (16) ou envoi de son identification (uID), et

   **en ce que** la balise (3) ignore un message de statut (16) ou une identification (uID) reçue par l'unité de bord (10) lorsque l'identification de balise (bID) reçue conjointement est identique à sa propre identification de balise (bID).

9. Procédé selon l'une des revendications 1 à 8, **caractérisé en ce que** plus de deux messages de statut (16) sont reçus et attribués les uns aux autres, et une voie de déplacement de l'unité de bord (10) est calculée à partir des positions ($P_i$) indiquées dans ceux-ci, laquelle est comparée avec le lieu prédéterminé (5-8) pour la détection de l'utilisation de lieu.

10. Procédé selon l'une des revendications 1 à 9, **caractérisé en ce que** l'identification radio (pID) est modifiée respectivement après environ 5 à 1000 messages de statut (16), de préférence 20 à 100.

11. Procédé selon l'une des revendications 1 à 9, **caractérisé en ce que** l'identification radio (pID) est modifiée au plus tôt après l'écoulement d'un laps de temps prédéterminé.

12. Procédé selon l'une des revendications 1 à 9, **caractérisé en ce que** l'identification radio (pID) n'est pas modifiée tant que l'unité de bord (10) se trouve dans la zone de couverture radio (4) d'une seule et même balise (3).

13. Procédé selon l'une des revendications 1 à 12, **caractérisé en ce que** chaque message de statut (16) indique également un vecteur de déplacement actuel (M) de l'unité de bord (10), lequel est également utilisé lors de la détection de l'utilisation de lieu.

14. Procédé selon l'une des revendications 1 à 13, **caractérisé en ce que** la position ($P_i$) de l'unité de bord (10) est déterminée au moyen de navigation par satellite (11) et améliorée à l'aide d'une position de référence (29) de la balise (3) déterminée au moyen de navigation par satellite.

15. Procédé selon l'une des revendications 1 à 14, **caractérisé en ce que** la position ($P_i$) de l'unité de bord (10) est déterminée au moyen de navigation par satellite (11) et améliorée à l'aide d'au moins une autre position ($P_i$) d'une unité de bord (10) voisine déterminée au moyen de navigation par satellite.

16. Procédé selon l'une des revendications 1 à 15, **caractérisé en ce que** la zone de couverture radio (4) de la balise (3) comprend le lieu prédéterminé (5-8).

17. Procédé selon l'une des revendications 1 à 16, **caractérisé en ce que** le lieu est un point géographique (5) et l'utilisation de lieu est un sous-dépassement d'une distance maximale ($a_m$) par rapport à ce point.

18. Procédé selon l'une des revendications 1 à 16, **caractérisé en ce que** le lieu est au moins un segment de route (8) et l'utilisation de lieu est une circulation sur l'au moins un segment de route (8).

19. Procédé selon l'une des revendications 1 à 16, **caractérisé en ce que** le lieu est une frontière (7) et l'utilisation de lieu un franchissement de frontière, dans lequel les frontières sont représentées sur une carte routière numérique (1) avec des segments de route (8) vectorisés, comprenant :

la détermination d'un point d'intersection ($T_0$) de la frontière (7) avec un segment de route (8) et une direction de référence ($R_0$) dans l'orientation de ce segment de route (8),
la projection continue de vecteurs ($v_i$) déterminés respectivement entre l'une des positions ($P_i$) obtenues à partir desdits messages de statut et le point d'intersection ($T_0$), sur la direction de référence ($R_0$), afin d'obtenir une suite de projections ($d_i$, $d_{i+1}$ ; $x^1_i$, $x^1_{i+1}$), et
la détection d'un franchissement de frontière lors d'une modification de direction ou de signe dans la suite de projections ($d_i$, $d_{i+1}$ ; $x^1_i$, $x^1_{i+1}$).

20. Procédé selon la revendication 19, **caractérisé en ce que** la projection est effectuée en formant des produits vectoriels intérieurs ($d_i$, $d_{i+1}$) des vecteurs ($v_i$) avec la direction de référence ($R_0$), et un franchissement de frontière est détecté lors d'un changement de signe des produits intérieurs.

21. Procédé selon la revendication 19, **caractérisé en ce que** la projection est effectuée en transformant les vecteurs ($v^1_i$) en un système de coordonnées local ($x^1/y^1$) avec la direction de référence ($R_0$) comme axe x ($x^1$), et un franchissement de frontière est détecté lors d'un changement de signe de ses coordonnées x ($x^1_i$, $x^1_{i+1}$).

22. Procédé selon l'une des revendications 19 à 21, **caractérisé par** l'étape supplémentaire de validation du franchissement de frontière, lorsque les valeurs des deux projections ($d_i$, $d_{i+1}$ ; $x^1_i$, $x^1_{i+1}$) situées avant et après le changement de direction ou de signe dépassent un minimum prédéterminé (min).

23. Procédé selon l'une des revendications 19 à 21, **caractérisé par** l'étape supplémentaire de validation du franchissement de frontière lorsque les distances normales ($s_i$, $s_{i+1}$ ; $y^1_i$, $y^1_{i+1}$) entre les deux positions ($P_i$, $P_{i+1}$) situées avant et après le changement de direction ou de signe et la direction de référence ($R_0$) ne dépassent pas un maximum prédéterminé ($max_i$, $max_2$, $max_3$).

24. Balise (3) pour l'identification d'un véhicule (9) utilisant un lieu prédéterminé (5-8), circulant avec une unité de bord (10) émettant de façon répétée des messages de statut (16) par radio, lesquels indiquent

respectivement une position ($P_i$) actuelle de l'unité de bord (10) et une identification radio (pID) variant respectivement selon un ou de plusieurs messages de statut (16), **caractérisée en ce qu'**elle est conçue pour, à l'aide d'un processeur (17) et d'un émetteur-récepteur (18) raccordé à celui-ci,

recevoir au moins un message de statut (16),

détecter une utilisation de lieu par l'évaluation (20) de l'au moins un message de statut (16) à l'aide de la/des position(s) ($P_i$) indiquée(s) dans celui-ci quant au lieu prédéterminé (5-8),

envoyer une demande d'identification (22) à l'unité de bord (10) susceptible d'être adressée par l'identification radio (pID) à partir de l'au moins un message de statut (16), et puis

recevoir (25) une identification univoque (uID) de l'unité de bord (10), laquelle demeure constante lors de plusieurs changements d'identification radio.

25. Balise selon la revendication 24, **caractérisée en ce qu'**elle est conçue pour

recevoir au moins deux messages de statut (16) et les attribuer (19) les uns aux autres à l'aide des identifications radio (pID) indiquées dans ceux-ci, et

détecter l'utilisation de lieu par le véhicule (9) par l'évaluation des messages de statut (16) attribués les uns aux autres, à l'aide des positions ($P_i$) indiquées dans ceux-ci quant au lieu prédéterminé (5-8).

26. Balise selon la revendication 24 ou 25, **caractérisée en ce qu'**elle contient un certificat d'expéditeur cryptographique (23), tout en étant conçue pour envoyer celui-ci ensemble avec la demande d'identification (22).

27. Unité de bord avec un processeur (12), un récepteur de navigation par satellite (11) pour la détermination de la position et un émetteur-récepteur (13) pour la communication radio, l'unité de bord (10) étant conçue pour envoyer de façon répétée des messages de statut (16) par radio à l'aide de l'émetteur-récepteur (13), lesquels contiennent respectivement une position ($P_i$) déterminée par le récepteur de navigation par satellite (11) et une identification radio (pID) de l'unité de bord (10) variant respectivement selon un ou plusieurs messages de statut (16), **caractérisée en ce qu'**elle est en outre conçue pour

recevoir une demande d'identification (22) venant d'une balise (3), contenant un certificat d'expéditeur cryptographique (23) et adressée à son identification radio actuelle (pID),

valider (24) le certificat d'expéditeur (23) et, si celui-ci est valide,

envoyer (25) une identification univoque (uID) de l'unité de bord (10) demeurant constante lors de plusieurs changements d'identification radio à la balise (3).

28. Unité de bord selon la revendication 27, **caractérisée en ce que** ses messages de statut (16) sont des messages CAM conformes à la norme ITS-G5 ou des messages BSM conformes à la norme WAVE.

*Fig. 1*

EP 2 660 793 B1

*Fig. 2*

$CAM_1(pID_1, P_1, M_1, ...)$

$CAM_2(pID_1, P_2, M_2, ...)$

$CAM_3(pID_1, P_3, M_3, ...)$

$CAM_4(pID_2, P_4, M_4, ...)$

$CAM_5(pID_2, P_5, M_5, ...)$

$CAM_i(pID_n, P_i, M_i, ...)$

$Id\_Req(pID_n, sID, Cert)$

$Id\_Rsp(sID, uID)$

$Svc\_Msg(uID, sId, data...)$

*Fig. 3*

*Fig. 4*

*Fig. 5*

*Fig. 6*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1519320 A1